# FASCICULE DE BREVET EUROPEEN

(11) **EP 1 720 433 B1**
(45) Date de publication et mention de la délivrance du brevet: **18.03.2009**
(21) Numéro de dépôt: 05717502.8
(22) Date de dépôt: 27.01.2005
(51) Int. Cl.: A47J 27/08

(54) **APPAREIL DOMESTIQUE DE CUISSON D'ALIMENTS SOUS PRESSION AVEC GUIDAGE AMELIORE DES MOYENS DE VERROUILLAGE**
HAUSHALTSDAMPFKOCHVORRICHTUNG MIT VERBESSERTER FÜHRUNG FÜR DIE VERRIEGELUNGSMITTEL
DOMESTIC PRESSURE FOOD COOKING DEVICE WITH IMPROVED GUIDE FOR THE LOCKING MEANS

(30) Priorité: 29.01.2004 FR 0400865
(43) Date de publication de la demande: 15.11.2006
(73) Titulaire: SEB S.A., 69132 Ecully Cedex (FR)
(72) Inventeur: SEURAT-GUIOCHET, Marie-Aurore, F-21000 Dijon (FR); CARTIGNY, Michel, Pierre, F-21310 Mirebeau sur Beze (FR)
(74) Mandataire: Martin, Didier Roland Valéry
(86) Numéro de dépôt international: PCT/FR2005/000179
(87) Numéro de publication internationale: WO 2005/082211

(56) Documents cités:
- EP-A- 1 342 440
- US-A- 4 627 417
- US-A- 6 019 029
- US-B1- 6 257 124
- US-B1- 6 513 420

## Description

### DOMAINE TECHNIQUE

La présente invention se rapporte au domaine technique général des appareils domestiques de cuisson d'aliments sous pression comprenant une cuve et un couvercle destiné à être verrouillé sur la cuve pour former une enceinte de cuisson sensiblement étanche, lesdits appareils étant destinés à assurer la cuisson sous pression de vapeur des aliments contenus dans la cuve.

La présente invention concerne plus particulièrement un appareil domestique de cuisson d'aliments sous pression comportant une cuve et un couvercle, ainsi qu'un dispositif de verrouillage / déverrouillage du couvercle sur la cuve, ledit dispositif comprenant :
- au moins une mâchoire, montée mobile radialement sur le couvercle par l'intermédiaire d'un bras entraîneur entre une position de verrouillage du couvercle sur la cuve et une position de déverrouillage dans laquelle le couvercle peut être retiré de la cuve,
- des moyens de commande du mouvement de ladite au moins une mâchoire, agencés de manière à permettre le déplacement du bras entraîneur dans l'une ou l'autre des positions de verrouillage et de déverrouillage,
- des moyens de guidage du mouvement de ladite au moins une mâchoire, assurant le guidage en déplacement du bras entraîneur relativement au couvercle, et comportant au moins une paire d'organes de guidage formés par un premier organe de guidage, associé au bras entraîneur, et par un second organe de guidage, lesdits premier et second organes de guidage étant conformés pour coopérer ensemble.

### TECHNIQUE ANTERIEURE

Parmi les dispositifs de verrouillage / déverrouillage connus, on distingue les dispositifs à mâchoires, ces derniers comportant généralement plusieurs mâchoires réparties de façon sensiblement régulière sur le couvercle, et montées mobiles radialement, par l'intermédiaire de bras entraîneurs, entre une position de verrouillage et une position de déverrouillage.

Pour ces appareils, le déplacement radial des mâchoires est généralement guidé à l'aide de moyens de guidage, par exemple formés par un pion de guidage susceptible de coulisser dans un orifice oblong traversant ménagé à travers les bras entraîneurs.

Ces moyens de guidage sont souvent disposés à l'extérieur de l'appareil, ce qui les rend visibles par l'utilisateur.

Or, il existe un besoin croissant de dissimuler les éléments techniques de l'appareil de manière à les rendre invisibles par l'utilisateur, d'une part pour des raisons évidentes liées à l'esthétique du produit, et d'autre part afin de limiter les agressions extérieures contre les pièces mécaniques et d'améliorer la sécurité d'utilisation de l'appareil.

On comprend en effet que si les éléments techniques sont apparents et accessibles sur le plan mécanique, certains utilisateurs pourraient être tentés de les réparer ou modifier, voire même de les remplacer, de telles opérations étant susceptibles d'affecter la sécurité d'utilisation de l'appareil.

Pour pallier ces inconvénients, il est connu de dissimuler les éléments techniques sous des pièces masquantes, telles que par exemple un bouton de commande ou encore un capot.

Toutefois, le recours à de tels artifices présente des inconvénients dans la mesure où d'une part il implique l'utilisation de pièces supplémentaires, et d'autre part l'utilisation d'une pièce masquante ne permet généralement pas de positionner les moyens de guidage de façon indifférente sur le couvercle, mais au contraire à un emplacement où la pièce masquante est susceptible d'être montée, par exemple au centre de l'appareil si la pièce masquante est formée par le bouton de commande.

Or, pour améliorer la précision du guidage et réduire les jeux au niveau des mâchoires, il est souvent préférable de positionner les moyens de guidage non pas au centre de l'appareil, mais plutôt dans une couronne périphérique.

Le document US-4627417 décrit un appareil de cuisson d'aliments sous pression.

### EXPOSE DE L'INVENTION

Les objets assignés à l'invention visent en conséquence à porter remède aux différents inconvénients énumérés précédemment et à proposer un nouvel appareil domestique de cuisson d'aliments sous pression présentant un bon aspect esthétique général, une bonne protection contre les salissures et agressions extérieures ainsi qu'un bon niveau de sécurité à l'utilisation.

Un autre objet de l'invention vise à proposer un nouvel appareil domestique de cuisson d'aliments sous pression permettant un guidage particulièrement précis du mouvement des mâchoires.

Un autre objet de l'invention vise à proposer un nouvel appareil domestique de cuisson d'aliments sous pression dont la conception et le montage sont simplifiés.

Un autre objet de l'invention vise à proposer un nouvel appareil domestique de cuisson d'aliments sous pression qui soit relativement léger et nécessite peu de pièces de montage.

Les objets assignés à l'invention sont atteints à l'aide d'un appareil domestique de cuisson d'aliments sous pression comportant une cuve et un couvercle, ainsi qu'un dispositif de verrouillage / déverrouillage du couvercle sur la cuve, ledit dispositif comprenant :
- au moins une mâchoire, montée mobile radialement sur le couvercle par l'intermédiaire d'un bras entraîneur entre une position de verrouillage du couvercle sur la cuve et une position de déverrouillage dans laquelle le couvercle peut être retiré de la cuve,
- des moyens de commande du mouvement de ladite au moins une mâchoire, agencés de manière à permettre le déplacement du bras entraîneur dans l'une ou l'autre des positions de verrouillage et de déverrouillage,
- des moyens de guidage du mouvement de ladite au moins une mâchoire, assurant le guidage en déplacement du bras entraîneur relativement au couvercle et comportant au moins une paire d'organes de guidage formée par un premier organe de guidage, associé au bras entraîneur, et par un second organe de guidage, lesdits premier et second organes de guidage étant conformés pour coopérer ensemble,
caractérisé en ce que ledit premier organe de guidage est situé sur la face inférieure du bras entraîneur située en regard du couvercle de manière à être d'une part disposé entre le couvercle et ledit bras entraîneur, et d'autre part recouvert et masqué par ledit bras entraîneur, le second organe de guidage étant situé sur le couvercle et immobile relativement à ce dernier.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 illustre, selon une vue générale en perspective, un appareil domestique de cuisson conforme à l'invention.
- La figure 2 illustre, selon une vue écorchée de dessus, le couvercle de l'appareil sur lequel est montée une mâchoire, ainsi que les moyens de guidage conformes à l'invention.
- La figure 3 illustre, selon une vue de dessous, une mâchoire sur laquelle est monté le premier organe de guidage.
- La figure 4 illustre, selon une vue de côté en coupe suivant la ligne A-A illustrée sur la figure 2, le positionnement relatif des moyens de guidage en position verrouillée.
- La figure 5 illustre, selon une vue de côté en coupe suivant la ligne A-A illustrée sur la figure 2, le positionnement relatif des moyens de guidage en position déverrouillée.
- La figure 6 illustre, selon une vue en perspective, une variante de réalisation du dispositif de verrouillage / déverrouillage conforme à l'invention.

### MEILLEURE MANIERE DE REALISER L'INVENTION

L'appareil de cuisson conforme à l'invention est destiné à assurer la cuisson d'aliments, sous pression, dans un contexte domestique.

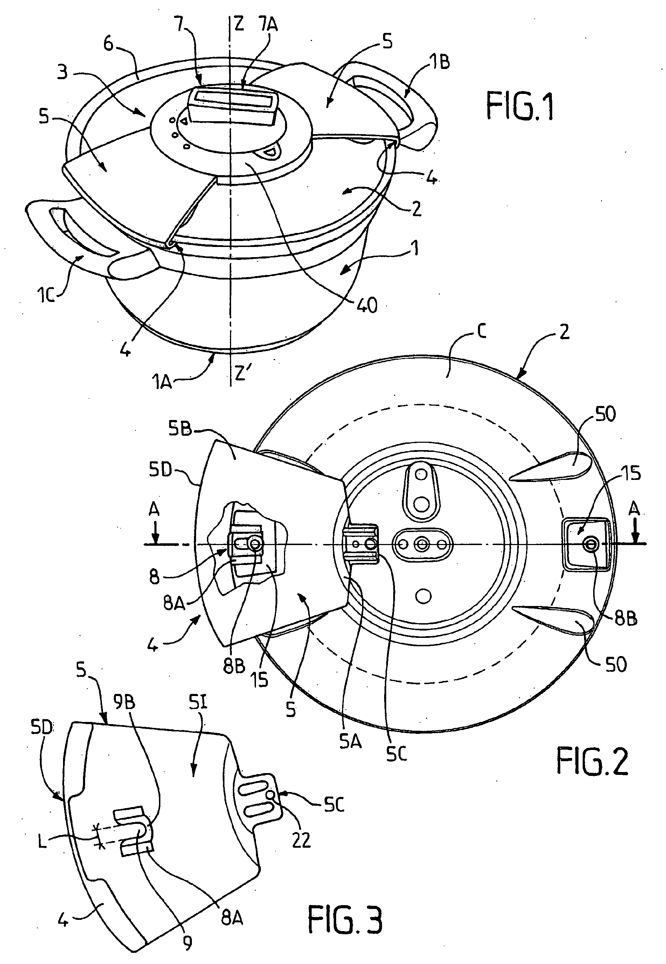

Cet appareil va maintenant être décrit en se reportant aux figures 1 à 6.

L'appareil de cuisson conforme à l'invention comprend une cuve 1 de forme préférentiellement cylindrique d'axe de symétrie Z-Z', ainsi qu'un couvercle 2 destiné à être rapporté de manière sensiblement étanche sur la cuve 1, par tous moyens appropriés.

Dans la suite de la description, le terme « *axial* » fera référence à la direction de l'axe de symétrie Z-Z', sensiblement vertical lorsque l'autocuiseur est dans sa position de fonctionnement normal.

L'appareil de cuisson domestique conforme à l'invention comporte avantageusement un moyen de régulation de pression agencé pour maintenir la pression dans l'enceinte à une valeur sensiblement constante prédéterminée, dite pression de fonctionnement.

De façon classique, le moyen de régulation de pression comprend une soupape de régulation montée mobile entre une position d'étanchéité dans laquelle elle ferme la communication de l'enceinte de l'appareil avec l'extérieur, notamment lorsque la pression régnant dans l'enceinte est sensiblement inférieure ou égale à la pression de fonctionnement, et une position de fuite dans laquelle elle met en communication l'intérieur de l'enceinte avec l'extérieur dès que la pression à l'intérieur de l'enceinte dépasse la pression de fonctionnement.

La cuve 1 est de manière classique réalisée à partir d'un matériau métallique tel que l'acier inoxydable et pourvue d'un fond 1A rapporté et solidaire de la cuve 1 par exemple par frappe à chaud.

La cuve 1 comporte avantageusement des organes de préhension, tels que des poignées 1B, 1C préférentiellement fixées sur les parois de la cuve 1.

Le couvercle 2 est avantageusement agencé de manière à pénétrer à l'intérieur de la cuve pour former un couvercle dit « *rentrant* ». Il présente en outre préférentiellement un pourtour circulaire, et peut être verrouillé sur la cuve 1 grâce à un dispositif de verrouillage / déverrouillage 3.

Le dispositif de verrouillage / déverrouillage 3 comporte, selon l'invention, au moins une mâchoire 4, montée mobile radialement sur le couvercle 2 par l'intermédiaire d'un bras entraîneur 5, entre une position de verrouillage du couvercle sur la cuve 1 dans laquelle le couvercle est solidarisé à la cuve, et une position de déverrouillage, dans laquelle le couvercle peut être séparé de la cuve.

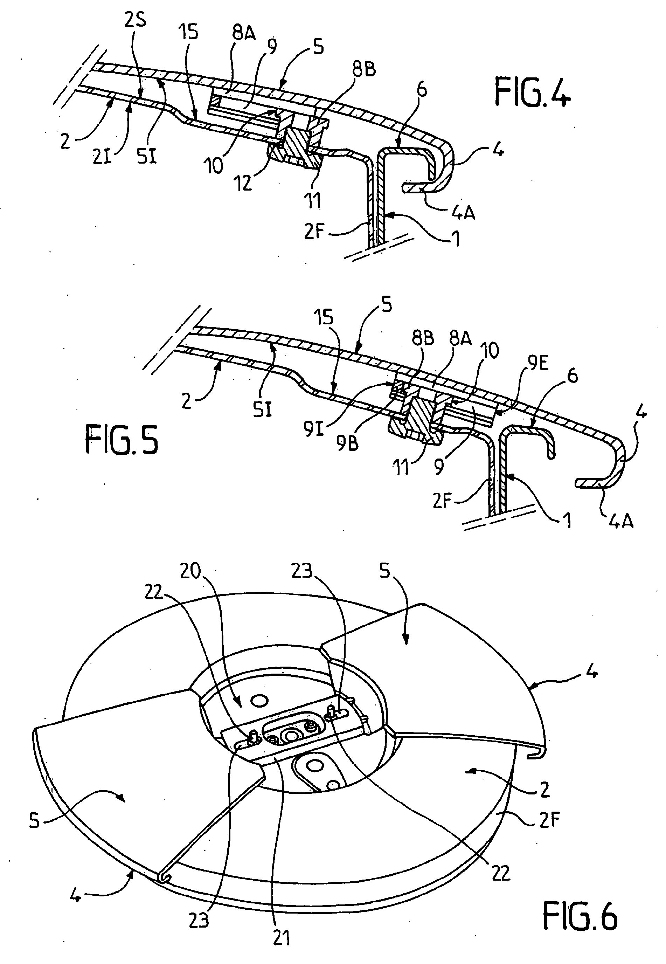

La mâchoire 4 se présente avantageusement sous la forme d'une plaque métallique profilée en U (figures 4 et 5) de manière à enserrer, par un bord rentrant 4A, le bord périphérique tombé 6 de la cuve 1, tel que cela est bien connu de l'homme du métier.

De façon préférentielle, le dispositif de verrouillage / déverrouillage 3 conforme à l'invention comporte deux mâchoires 4 avantageusement positionnées en vis-à-vis, de manière diamétralement opposée en regard de l'axe de symétrie Z-Z' de l'appareil (figure 1).

Chaque mâchoire 4 est alors reliée à ou venue de matière avec un bras entraîneur 5 correspondant, tel que cela est représenté sur les figures 1 à 6.

Le dispositif de verrouillage / déverrouillage 3 conforme à l'invention comprend également des moyens de commande 7 du mouvement des mâchoires 4, agencés de manière à permettre le déplacement des bras entraîneurs 5 dans l'une ou l'autre des positions de verrouillage et de déverrouillage.

Les moyens de commande 7 comportent avantageusement une poignée de commande 7A externe susceptible d'être actionnée par l'utilisateur, de manière à entraîner un mécanisme de commande (non représenté) disposé sensiblement à l'aplomb de la poignée de commande 7A et permettant de transformer le mouvement, par exemple rotatif, de la poignée de commande 7A, en un mouvement de translation des bras entraîneurs 5 et des mâchoires 4 associées.

Le mécanisme de commande sus-mentionné pourra être de tout type classique bien connu de l'homme du métier, et ne sera pas décrit plus en détails dans la suite.

Selon l'invention, le dispositif de verrouillage / déverrouillage 3 du couvercle comporte également des moyens de guidage 8 du mouvement des mâchoires 4 assurant le guidage en déplacement des bras entraîneurs 5 relativement au couvercle 2.

Les moyens de guidage 8 comportent avantageusement au moins une paire d'organes de guidage formés par un premier organe de guidage 8A associé à un bras entraîneur 5, et par un second organe de guidage 8B associé au couvercle 2, c'est-à-dire solidarisé avec ledit couvercle 2.

Les premier et second organes de guidage 8A, 8B sont avantageusement conformés pour coopérer ensemble, le premier organe de guidage 8A se déplaçant avec le bras entraîneur 5 relativement au second organe de guidage 8B.

Selon l'invention, le premier organe de guidage 8A est situé, c'est-à-dire fixé ou ménagé, sur la face inférieure 51 du bras entraîneur 5 située en regard du couvercle (figures 3, 4 et 5).

Grâce à cette configuration, le premier organe de guidage 8A se trouve disposé entre le couvercle 2 et le bras entraîneur 5, et est recouvert et masqué par ce dernier (figures 4 et 5).

Selon l'invention, le second organe de guidage 8B est situé sur le couvercle 2, c'est-à-dire fixé sur ou ménagé dans le couvercle 2 et immobile relativement à ce dernier.

Ainsi, les moyens de guidage sont disposés de telle manière que l'accessibilité visuelle et/ou mécanique à ces derniers nécessite le démontage préalable des bras entraîneurs 5 relativement au couvercle 2. En effet, lorsque l'appareil est en position de fonctionnement normal, les moyens de guidage 8 ne sont pas visibles de l'extérieur, ni accessibles directement, ce qui confère à l'appareil non seulement un bon aspect esthétique général, mais également une bonne sécurité d'utilisation, l'opérateur n'étant pas en mesure de procéder à des modifications des éléments techniques mis en oeuvre.

Les bras entraîneurs 5 comportent avantageusement un secteur interne 5A caché sous un capot 40, situé sensiblement à l'aplomb des moyens de commande 7 (figure 1), et un secteur externe 5B visible, à l'aplomb duquel sont disposés les moyens de guidage 8 (figure 2).

Ainsi, le secteur externe 5B venant intrinsèquement recouvrir les moyens de guidage 8, il n'est pas nécessaire d'avoir recours à une pièce masquante supplémentaire.

Grâce au montage conforme à l'invention, il est possible de monter les organes de guidage 8A, 8B à la périphérie de l'appareil et non nécessairement à l'aplomb du capot central 40, ce qui permet d'améliorer la précision du guidage tout en garantissant un bon niveau de sécurité à l'utilisation grâce au masquage des organes de guidage 8A, 8B.

Un tel montage permet ainsi de réduire le nombre de pièces intervenant dans la conception de l'appareil, et d'améliorer l'aspect esthétique général de ce dernier, les bras entraîneurs 5 présentant préférentiellement une structure pleine, ainsi qu'une paroi externe sensiblement homogène et lisse.

De façon particulièrement avantageuse, le premier organe de guidage 8A est formé par une pièce rapportée, fixée et par exemple collée ou soudée sur la face inférieure 51 des bras entraîneurs 5.

Selon une variante préférentielle de réalisation de l'invention, le premier organe de guidage 8A est formé par un moyen femelle, le second organe de guidage 8B étant formé par un moyen mâle correspondant.

Bien évidemment, il est envisageable d'inverser cette configuration, le premier organe de guidage 8A étant alors formé par le moyen mâle, et le second organe de guidage 8B étant formé par le moyen femelle correspondant.

Selon une variante préférentielle, le moyen femelle est formé par une patte de guidage 8A, et le moyen mâle est formé par un ergot 8B (figure 2).

La patte de guidage 8A comporte avantageusement un chemin de guidage 9 dimensionné de telle manière que l'ergot 8B puisse coulisser à l'intérieur.

Tel que cela est représenté sur la figure 5, le chemin de guidage 9 s'étend de façon sensiblement rectiligne et radiale entre une limite interne 91 et une limite externe 9E.

La limite interne 9I est avantageusement matérialisée par un bord 9B formé dans la patte de guidage 8A. Le bord 9B forme ainsi avantageusement une butée à l'encontre de l'ergot 8B lorsque le dispositif est en position de déverrouillage (figure 5).

Ainsi, lors du déplacement du bras entraîneur 5 entre la position verrouillée représentée sur la figure 4 et la position déverrouillée représentée sur la figure 5, l'ergot 8B coulisse le long de la patte de guidage 8A jusqu'à ce que le bord 9B de cette dernière vienne au contact de l'ergot 8B.

Un tel montage permet ainsi de délimiter l'amplitude de déplacement radial des mâchoires 4.

De façon particulièrement avantageuse, l'ergot 8B est formé par un écrou à épaulement, ledit épaulement 10 étant destiné à limiter la mobilité verticale du bras entraîneur 5 par coopération avec la patte de guidage 8A. Ainsi, le diamètre de l'épaulement 10 étant sensiblement plus grand que la largeur L du chemin de guidage 9, l'écrou à épaulement permet de retenir le bras entraîneur 5 et l'empêche de s'écarter du couvercle 2 au-delà d'une distance prédéterminée.

Selon un mode de réalisation préférentiel de l'invention représenté sur les figures 4 et 5, l'écrou à épaulement 8B est maintenu en position sur le couvercle 2 à l'aide d'une vis 11 dont la partie filetée est engagée à l'intérieur d'un orifice 12 ménagé dans la paroi du couvercle 2. La vis 11 et l'écrou à épaulement 8B sont ainsi assemblés de part et d'autre de la paroi du couvercle 2, de manière à venir avantageusement en appuis respectifs sur les surfaces inférieure 2I respectivement supérieure 2S du couvercle 2 (figure 4).

Bien évidemment, il est également possible de fixer l'ergot 8B sur le couvercle 2 par tout autre moyen bien connu de l'homme du métier, et notamment par soudure, rivetage ou clinchage

Selon une variante préférentielle, la limite externe 9E du chemin de guidage 9 n'est pas fermée et s'ouvre préférentiellement vers l'extérieur.

Avantageusement, le couvercle 2 comporte au moins un logement 15 situé sensiblement à la verticale du premier élément de guidage 8A, notamment la patte de guidage, de manière à permettre à ce dernier de pénétrer sensiblement à l'intérieur du logement 15 (figures 4 et 5).

Bien évidemment, si l'appareil est pourvu de deux mâchoires 4 opposées et de deux bras entraîneurs 5, le couvercle 2 sera également pourvu de deux logements 15, préférentiellement disposés de façon sensiblement symétrique relativement à l'axe de symétrie Z-Z'.

Le recours à ces logements 15 confère ainsi une forme compacte à l'ensemble formé par le couvercle 2, les bras entraîneurs 5 et les mâchoires 4 associées.

De façon particulièrement avantageuse, les logements 15 s'étendent sensiblement radialement, de manière à autoriser le déplacement radial du premier élément de guidage 8A en leur sein.

De façon encore plus préférentielle, et tel que cela est représenté sur la figure 2, des rampes d'appui 50 peuvent être disposées sur le couvercle 2, de manière à ménager un espace entre le couvercle 2 et les bras entraîneurs 5 au sein duquel les moyens de guidage 8 peuvent être avantageusement disposés.

Les moyens de guidage 8 peuvent ainsi être montés entre les rampes d'appui 50, ces dernières servant par ailleurs de support aux bras entraîneurs 5 lors de leur déplacement.

Selon un mode préférentiel de réalisation de l'invention, les moyens de commande 7 occupent une position sensiblement centrale sur le couvercle 2, et sont reliés mécaniquement aux mâchoires 4 par le biais des deux bras entraîneurs 5 respectifs, lesquels présentent chacun une extrémité interne 5C destinée à coopérer avec les moyens de commande 7 et une extrémité externe 5D reliée à ou venue de matière avec la mâchoire 4 correspondante (figures 2 et 3).

Tel que cela est représenté sur la figure 6, l'appareil comporte également de préférence un système de guidage 20 sensiblement central et associé à l'extrémité interne 5C des bras entraîneurs 5, de manière à assurer le déplacement radial rectiligne de ces derniers lorsque les moyens de commande 7 sont actionnés.

A cet effet, le système de guidage 20 comporte avantageusement une pièce de guidage 21 qui enserre les bras entraîneurs 5 sur une partie de leur longueur à proximité de leur extrémité interne 5C (figure 6).

Les bras entraîneurs 5 comportent alors préférentiellement, vers leur extrémité interne 5C, un pion de guidage 22 susceptible de coulisser dans une ouverture oblongue 23 ménagée à travers la pièce de guidage 21.

Selon cette variante, l'appareil comporte également deux paires d'organes de guidage 8 supplémentaires disposés respectivement sous un bras entraîneur 5 correspondant, dans une zone sensiblement plus proche de l'extrémité externe 5D du bras entraîneur 5 que de son extrémité interne 5C.

Ainsi, les organes de guidage 8 supplémentaires sont préférentiellement disposés dans une couronne périphérique C, tel que cela est représenté sur la figure 2. Les deux paires d'organes de guidage 8 supplémentaires viennent ainsi compléter le système de guidage 20 central, de manière à améliorer la précision du guidage, notamment en périphérie du couvercle 2.

Les organes de guidage 8 permettent ainsi, notamment grâce au chemin de guidage 9, et à leur disposition excentrée, à la périphérie de l'appareil, d'assurer un guidage très précis des mâchoires 4, permettant un positionnement sensiblement parfait de ces dernières.

La précision dans le guidage permet ainsi d'éviter d'éventuels décalages dans le positionnement des mâchoires lors du verrouillage, de tels décalages étant susceptibles de conduire à un déséquilibre dans la répartition des contraintes exercées sur le couvercle.

Le mode de fonctionnement et d'utilisation de l'appareil de cuisson domestique conforme à l'invention va maintenant être décrit en se reportant aux figures 1 à 6.

Après avoir introduit les aliments dans la cuve 1, l'utilisateur doit rapporter le couvercle 2 sur cette dernière.

La mise en place du couvercle 2 sur la cuve 1 nécessite l'ouverture des mâchoires 4. Pour cela, l'utilisateur tourne la poignée de commande 7A centrale de manière à provoquer un déplacement radial centrifuge des bras entraîneurs 5 et des mâchoires 4 associées.

Précisément, le guidage des bras entraîneurs 5 et des mâchoires 4 est de préférence réalisé en deux points, d'une part vers le centre de l'appareil grâce à une pièce de guidage 21 coopérant avec des pions de guidage 22 disposés sur les bras entraîneurs 5, et d'autre part vers la périphérie de l'appareil, à l'aide des moyens de guidage 8 supplémentaires interposés entre la face inférieure 5I et le couvercle 2.

Le recours à ces moyens de guidage 8 supplémentaires permet ainsi d'améliorer la précision du guidage tout en conservant un appareil de cuisson de conception particulièrement compacte.

Lorsque les mâchoires 4 sont en position déverrouillée, tel que cela est représenté sur la figure 5, la patte de guidage 8A vient en position de butée contre l'ergot 8B, limitant ainsi l'amplitude de déplacement latéral des mâchoires 4.

Après avoir mis le couvercle 2 en position sur la cuve 1, et avoir introduit le flanc 2F du couvercle 2 à l'intérieur de la cuve 1, l'utilisateur peut procéder au verrouillage des mâchoires 4.

Pour cela, il actionne la poignée de commande 7A suivant un sens de rotation opposé au sens correspondant à l'ouverture, de manière à provoquer le déplacement radial centripète des bras entraîneurs 5 et des mâchoires 4 jusqu'à ce que ces dernières viennent enserrer le rebord 6 de la cuve 1.

La patte de guidage 8A suit ainsi le mouvement des bras entraîneurs 5 et se déplace sensiblement vers le haut en direction centripète relativement à l'ergot 8B, qui reste immobile sur le couvercle 2.

Une fois verrouillé, l'appareil de cuisson peut être positionné sur une source de chauffe, de manière à générer une augmentation de la pression régnant dans la cuve. La pression monte ainsi progressivement dans l'enceinte de cuisson jusqu'à ce qu'elle atteigne une pression nominale de fonctionnement, laquelle est régulée par la soupape de régulation.

Lorsque la source de chauffe est arrêtée et que la vapeur contenue à l'intérieur du récipient est évacuée et la surpression annulée, l'appareil peut être déverrouillé, l'utilisateur étant alors en mesure de tourner la poignée de commande 7A jusqu'à atteindre la position de déverrouillage, ce qui lui permet d'ouvrir le couvercle 2 en toute sécurité.

### POSSIBILITE D'APPLICATION INDUSTRIELLE

L'invention trouve son application industrielle dans la conception et la fabrication d'appareils domestiques de cuisson sous pression.

## Revendications

1. Appareil domestique de cuisson d'aliments sous pression comportant une cuve (1) et un couvercle (2), ainsi qu'un dispositif de verrouillage / déverrouillage (3) du couvercle (2) sur la cuve (1), ledit dispositif comprenant :
- au moins une mâchoire (4), montée mobile radialement sur le couvercle (2) par l'intermédiaire d'un bras entraîneur entre une position de verrouillage du couvercle (2) sur la cuve (1) et une position de déverrouillage dans laquelle le couvercle (2) peut être retiré de la cuve (1),
- des moyens de commande (7) du mouvement de ladite au moins une mâchoire (4), agencés de manière à permettre le déplacement du bras entraîneur (5) dans l'une ou l'autre des positions de verrouillage et de déverrouillage,
- des moyens de guidage (8) du mouvement de ladite au moins une mâchoire (4), assurant le guidage en déplacement du bras entraîneur (5) relativement au couvercle (2) et comportant au moins une paire d'organes de guidage formée par un premier organe de guidage (8A), associé au bras entraîneur (5), et par un second organe de guidage (8B), lesdits premier et second organes de guidage (8A, 8B) étant conformés pour coopérer ensemble,
**caractérisé en ce que** ledit premier organe de guidage (8A) est situé sur la face inférieure (5I) du bras entraîneur (5) située en regard du couvercle de manière à être d'une part disposé entre le couvercle (2) et ledit bras entraîneur (5) et d'autre part recouvert et masqué par ledit bras entraîneur, le second organe de guidage (8B) étant associé à et situé sur le couvercle (2) et immobile relativement à ce dernier.

2. Appareil selon la revendication 1 **caractérisé en ce que** ledit bras entraîneur (5) comporte au moins un secteur externe (5B) visible, à l'aplomb duquel sont disposés les moyens de guidage (8).

3. Appareil selon la revendication 1 ou 2 **caractérisé en ce que** le premier organe de guidage (8A) est formé par une pièce rapportée sur la face inférieure (5I) du bras entraîneur (5).

4. Appareil selon la revendication 1, 2 ou 3 **caractérisé en ce que** le premier organe de guidage (8A) est formé par un moyen femelle, le second organe de guidage (8B) étant formé par un moyen mâle correspondant.

5. Appareil selon la revendication 1, 2 ou 3 **caractérisé en ce que** le premier organe de guidage (8A) est formé par un moyen mâle, le second organe de guidage (8B) étant formé par un moyen femelle correspondant.

6. Appareil selon la revendication 4 ou 5 **caractérisé en ce que** le moyen femelle est formé par une patte de guidage (8A), le moyen mâle étant formé par un ergot (8B).

7. Appareil selon la revendication 6 **caractérisé en ce que** la patte de guidage (8A) comporte un chemin de guidage (9) au sein duquel l'ergot (8B) est susceptible de coulisser.

8. Appareil selon la revendication 7 **caractérisé en ce que** le chemin de guidage (9) s'étend de façon sensiblement rectiligne et radiale entre une limite interne (9I) et une limite externe (9E), ladite limite interne étant matérialisée par un bord (9B) formant butée à l'encontre de l'ergot (8B).

9. Appareil selon l'une des revendications 6 à 8 **caractérisé en ce que** l'ergot (8B) est formé par un écrou à épaulement, ledit épaulement (10) étant destiné à limiter la mobilité verticale du bras entraîneur (5) par coopération avec la patte de guidage (8A).

10. Appareil selon l'une des revendications 1 à 9 **caractérisé en ce que** le couvercle (2) comporte au moins un logement (15) situé sensiblement à la verticale du premier élément de guidage de manière à permettre à ce dernier de pénétrer sensiblement à l'intérieur dudit logement (15).

11. Appareil selon la revendication 10 **caractérisé en ce que** ledit logement (15) s'étend sensiblement radialement de manière à autoriser le déplacement radial du premier élément de guidage (8A).

12. Appareil selon l'une quelconque des revendications 1 à 11 **caractérisé en ce qu'**il comporte :
- deux mâchoires (4) opposées,
- des moyens de commande (7) occupant une position sensiblement centrale sur le couvercle (2), reliés mécaniquement audites mâchoires (4) par le biais de deux bras entraîneurs (5) respectifs, présentant chacun une extrémité interne (5C) destinée à coopérer avec les moyens de commande et une extrémité externe (5D) reliée à ou venue de matière avec la mâchoire (4) correspondante,
- un système de guidage (20) sensiblement central associé à l'extrémité interne (5C) desdits bras entraîneurs (5) et assurant le déplacement radial rectiligne de ces derniers lorsque les moyens de commande (7) sont actionnés,
- et deux paires d'organes de guidage (8) supplémentaires disposées respectivement sous un bras entraîneur (5) correspondant, dans une zone sensiblement plus proche de l'extrémité externe (5D) du bras entraîneur que de l'extrémité interne (5C) de ce dernier.

## Claims

1. Domestic appliance for cooking food under pressure comprising a vessel (1) and a lid (2), as well as a device (3) for locking/unlocking the lid (2) on the vessel (1), the said device comprising:
- at least one jaw (4), mounted so as to be able to move radially on the lid (2) by means of a driving arm between a position of locking the lid (2) on the vessel (1) and an unlocking position in which the lid (2) can be removed from the vessel (1),
- means (7) for controlling the movement of the said at least one jaw (4), arranged so as to allow the movement of the driving arm (5) into one or other of the locking and unlocking positions,
- means (8) for guiding the movement of the said at least one jaw (4) providing the guidance in movement of the driving arm (5) relative to the lid (2) and comprising at least one pair of guide members formed by a first guide member (8A) associated with the driving arm (5) and a second guide member (8B), the said first and second guide members (8A, 88) being conformed so as to cooperate together,
**characterised in that** the said first guide member (8A) is situated on the bottom face (5I) of the driving arm (5) which is situated opposite the lid so as firstly to be disposed between the lid (2) and the said driving arm (5) and secondly covered and masked by the said driving arm, the second guide member (8B) being associated with and situated on the lid (2) and immovable relative to the latter.

2. Appliance according to claim 1, **characterised in that** the said driving arm (5) comprises at least one visible external sector (5B), vertically in line with which there are disposed the guide means (8).

3. Appliance according to claim 1 or 2, **characterised in that** the first guide member (8A) is formed by a piece attached to the bottom face (5I) of the driving arm (5).

4. Appliance according to claim 1, 2 or 3, **characterised in that** the first guide member (8A) is formed by a female means, the second guide member (8B) being formed by a corresponding male means.

5. Appliance according to claim 1, 2 or 3, **characterised in that** the first guide member (8A) is formed by a male means, the second guide member (8B) being formed by a corresponding female means.

6. Appliance according to claim 4 or 5, **characterised in that** the female means is formed by a guide tab (8A), the male means being formed by a lug (8B).

7. Appliance according to claim 6, **characterised in that** the guide tab (8A) comprises a guide track (9) within which the lug (8B) is able to slide.

8. Appliance according to claim 7, **characterised in that** the guide track (9) extends in a substantially rectilinear and radial fashion between an internal limit (9I) and an external limit (9E), the said internal limit being represented by an edge (98) forming a stop counter to the lug (8B).

9. Appliance according to one of claims 6 to 8, **characterised in that** the lug (8B) is formed by a nut with a shoulder, the said shoulder (10) being intended to limit the vertical mobility of the driving arm (5) by cooperation with the guide tab (8A).

10. Appliance according to one of claims 1 to 9, **characterised in that** the lid (2) comprises at least one housing (15) situated substantially vertically to the first guide element so as to enable the latter to enter substantially within the said housing (15).

11. Appliance according to claim 10, **characterised in that** the said housing (15) extends substantially radically so as to allow the radial movement of the first guide element (8A).

12. Appliance according to any one of claims 1 to 11, **characterised in that** it comprises:
- two opposite jaws (4),
- control means (7) occupying a substantially central position on the lid (2), mechanically connected to the said jaws (4) by means of two respective driving arms (5), each having an internal end (5C) intended to cooperate with the control means and an external end (5D) connected to or made in one piece with the corresponding jaw (4),
- a substantially central guidance system (20) associated with the internal end (5C) of the said driving arms (5) and ensuring the rectilinear radial movement of the latter when the control means (7) are actuated,
- and two pairs of supplementary guide members (8) disposed respectively under a corresponding driving arm (5), in a zone substantially closer to the external end (5D) of the driving arm than the internal end (5C) of the latter.

## Patentansprüche

1. Haushaltsdampfkochvorrichtung, umfassend ein Gefäß (1) und einen Deckel (2), ebenso wie eine Verriegelungs/Entriegelungsvorrichtung (3) des Deckels (2) auf dem Gefäß (1), wobei die Vorrichtung Folgendes umfasst:
- mindestens eine Backe (4), die radial beweglich auf dem Deckel (2) mithilfe eines Mitnahmearms zwischen einer Verriegelungsposition des Deckels (2) auf dem Gefäß (1) und einer Entriegelungsposition, in der der Deckel (2) vom Gefäß (1) entfernt werden kann, angebracht ist.
- Mittel zur Steuerung (7) der Bewegung der mindestens einen Backe (4), die so angeordnet sind, dass sie die Verschiebung des Mitnahmearms (5) in die eine oder die andere der Verriegelungs- und der Entriegelungsposition ermöglichen.
- Mittel zur Führung (8) der Bewegung der mindestens einen Backe (4), die die Führung bei der Verschiebung des Mitnahmearms (5) bezüglich des Deckels (2) sicherstellen und mindestens ein Paar Führungsorgane umfassen, das von einem ersten Führungsorgan (8A), verbunden mit dem Mitnahmearm (5), und von einem zweiten Führungsorgan (8B) gebildet ist, wobei das erste und das zweite führungsorgan (8A, 8B) dazu angepasst sind zusammenzuwirken,
**dadurch gekennzeichnet, dass** das erste Führungsorgan (8A) auf der Unterseite (5I) des Mitnahmearms (5) gegenüber dem Deckel angeordnet ist, um einerseits zwischen dem Deckel (2) und dem Mitnahmearm (5) angebracht und andererseits vom Mitnahmearm verdeckt und verborgen zu sein, wobei das zweite Führungsorgan (8B) mit dem Deckel (2) verbunden und auf diesem angebracht und hinsichtlich des Letzteren unbeweglich ist.

2. Vorrichtung nach Anspruch 1, **dadurch gekennzeichnet, dass** der Mitnahmearm (5) mindestens einen sichtbaren externen Abschnitt (5B) umfasst, zu dem die Führungsmittel (8) senkrecht angebracht sind.

3. Vorrichtung nach Anspruch 1 oder 2, **dadurch gekennzeichnet, dass** das erste Führungsorgan (8A) aus einem Stück gebildet ist, das auf der Unterseite (5I) des Mitnahmearms (5) angeordnet ist.

4. Vorrichtung nach Anspruch 1, 2 oder 3, **dadurch gekennzeichnet, dass** das erste Führungsorgan (8A) aus einem Aufnahmemittel gebildet ist, wobei das zweite Führungsorgan (8B) aus einem entsprechenden Steckmittel gebildet ist.

5. Vorrichtung nach Anspruch 1, 2 oder 3, **dadurch gekennzeichnet, dass** das erste Führungsorgan (8A) aus einem Steckmittel gebildet ist, wobei das zweite Führungsorgan (8B) aus einem entsprechenden Aufnahmemittel gebildet ist.

6. Vorrichtung nach Anspruch 4 oder 5, **dadurch gekennzeichnet, dass** das Aufnahmemittel aus einer Führungsschiene (8A) gebildet ist, wobei das Steckmittel aus einem Vorsprung (8B) gebildet ist.

7. Vorrichtung nach Anspruch 6, **dadurch gekennzeichnet, dass** die Führungsschiene (8A) einen Führungsweg (9) umfasst, innerhalb dessen der Vorsprung (8B) dazu imstande ist zu gleiten.

8. Vorrichtung nach Anspruch 7, **dadurch gekennzeichnet, dass** sich der Führungsweg (9) im Wesentlichen geradlinig und radial zwischen einer inneren Grenze (91) und einer äußeren Grenze (9E) erstreckt, wobei die innere Grenze durch einen Rand (9B) festgelegt ist, der einen Anschlag gegen den Vorsprung (8B) bildet.

9. Vorrichtung nach einem der Ansprüche 6 bis 8, **dadurch gekennzeichnet, dass** der Vorsprung (8B) durch eine Ansatzmutter gebildet ist, wobei der Ansatz (10) dazu vorgesehen ist, die vertikale Beweglichkeit des Mitnahmearms (5) durch Zusammenwirkung mit der Führungsschiene (8A) zu begrenzen.

10. Vorrichtung nach einem der Ansprüche 1 bis 9, **dadurch gekennzeichnet, dass** der Deckel (2) mindestens eine Lagerung (15) umfasst, die im Wesentlichen vertikal zum ersten Führungselement angeordnet ist, um es Letzterem zu ermöglichen, im Wesentlichen in das Innere der Lagerung (15) einzudringen.

11. Vorrichtung nach Anspruch 10, **dadurch gekennzeichnet, dass** sich die Lagerung (15) im wesentlichen radial erstreckt, um die radiale Verschiebung des ersten Führungselementes (8A) zu ermöglichten.

12. Vorrichtung nach einem der Ansprüche 1 bis 11, **dadurch gekennzeichnet, dass** sie Folgendes umfasst:
- zwei einander gegenüberliegende Backen (4),
- Steuermittel (7), die eine im Wesentlichen zentrale Position auf dem Deckel (2) einnehmen, und die mechanisch mit den Backen (4) über zwei entsprechende Mitnahmearme (5) verbunden sind, von denen jeder ein inneres Ende (5C) aufweist, das dazu vorgesehen ist, mit den Steuermitteln zusammenzuwirken, und ein äußeres Ende (5D), das mit der entsprechenden Backe (4) verbunden ist oder mit dieser ein Stück bildet,
- ein im Wesentlichen zentrales Führungssystem (20), das mit dem inneren Ende (5C) der Mitnahmearme (5) verbunden isL und die radiale geradlinige Verschiebung der Letzteren sicherstellt, wenn die Steuermittel (7) betätigt werden,
- und zwei Paare zusätzlicher Führungsorgane (8), die jeweils unter einem entsprechenden Mitnahmearm (5) in einem Bereich angebracht sind, der sich im Wesentlichen näher am äußerten Ende (5D) des Mitnahmearms als am innern Ende (5C) des Letzteren befindet.
